# DEMANDE DE BREVET EUROPEEN

(11) **EP 0 629 064 A1**
(43) Date de publication de la demande: **14.12.1994**
(21) Numéro de dépôt: 94401258.2
(22) Date de dépôt: 07.06.1994
(51) Int. Cl.: H04L 12/56, H04Q 7/00, H04B 7/26

(54) **Procédé de gestion de la transmission de la parole et de données dans une structure à accès multiples à répartition dans le temps et structure mettant en oeuvre ce procédé**

(30) Priorité: 08.06.1993 FR 9306832
(71) Demandeur: THOMSON-CSF, 75008 Paris (FR); TRIALOG INFORMATIQUE, F-75008 Paris (FR)
(72) Inventeur: Favennec, Albert, F-92402 Courbevoie Cédex (FR); Le Scoul, Marguerite, F-92402 Courbevoie Cédex (FR); Kung, Antonio, F-92402 Courbevoie Cédex (FR); Aslanian, Raffi, F-92402 Courbevoie Cédex (FR)
(74) Mandataire: Courtellemont, Alain

(57) **Abrégé**

L'invention concerne, en particulier, la transmission d'informations de parole et de données dans une structure faite de noeuds de communication entre lesquels des canaux permettent d'établir des communications par câbles ou par voie hertz ienne.

Le noeud appelant (N1) demande à un organe de gestion central (G) un numéro d'identification (TI) de la communication à établir; puis chacun des deux noeuds communique en associant ce numéro à tout envoi d'informations et en utilisant de préférence (3) un canal dont il dispose déjà pour une autre communication entre les deux noeuds considérés; si c'est impossible, il demande (3a) l'attribution d'un canal libre à l'organe de gestion (G). Quand, en cours de communication, un canal n'est plus utilisé le noeud auquel il a été attribué peut le rendre à l'organe de gestion.

Application aux structures à accès multiples à répartition dans le temps.

## Description

La présente invention concerne un procédé de transmission de la parole et de données dans une structure à accès multiples à répartition dans le temps dite structure AMRT ; la présente invention concerne également une structure AMRT pour la mise en oeuvre de ce procédé.

Ces structures, aussi dites TDMA (Time Division Multiple Access dans la littérature anglo-saxonne), sont connues ; elles sont utilisées pour constituer des réseaux où les liaisons entre les noeuds sont du type câblées ou du type radio.

Dans ces structures les transmissions se font par trames de communication subdivisées en intervalles de temps ou l.T. (time slots ou time intervals dans la littérature anglo-saxonne). Chaque intervalle de temps est associé à une communication bidirectionnelle entre deux noeuds. Ainsi, par exemple, avec des trames de 8 intervalles de temps, le cinquième intervalle de temps sera affecté, à un moment donné, à une communication à établir entre deux noeuds donnés du réseau ; ce cinquième intervalle de temps ne sera disponible pour être affecté à une autre communication entre deux noeuds du réseau que lorsque la communication à laquelle il était précédemment affecté, se sera achevée.

Le canal de communication constitué par un intervalle de temps qui se répète d'une trame à la suivante est le quantum de ressource alloué à la communication dans une structure AMRT. Dans certains cas ce canal est plus petit, par exemple un l.T. toutes les deux trames, ou plus grand, par exemple deux l.T. par trame.

Il est à noter que la garantie d'un quantum de ressource à une communication entraîne un gâchis de ressources du fait que la communication s'effectue généralement alternativement dans un sens puis dans le sens opposé et que des silences apparaissent en particulier avec la transmission de la parole.

La présente invention a pour but d'éviter ou, pour le moins, de réduire cet inconvénient tout en accroissant les capacités de transmission.

Ceci est obtenu en retirant un canal à un noeud auquel il a été attribué pour émettre, dès qu'un silence d'une durée donnée se produit dans l'utilisation de ce canal.

Selon l'invention il est proposé un procédé de gestion de la transmission de la parole et de données dans une structure à accès multiples à répartition dans le temps comportant des noeuds de communication et des canaux de communication pour permettre d'établir des communications entre les noeuds, caractérisé en ce qu'il consiste, quand une communication doit être établie entre deux noeuds de la structure, à attribuer un numéro d'identification à la communication considérée, à le faire connaître aux deux noeuds considérés et à l'associer à chaque transmission relative à la communication considérée, à utiliser en priorité les canaux déjà utilisés pour d'autres communications entre les deux noeuds considérés et capables de passer en plus la communication considérée et, s'il n'en existe pas ou s'il ne sont pas capables de passer en plus la communication considérée, à demander l'attribution de canaux à un organe de gestion des canaux, et à rendre des canaux attribués à l'organe de gestion au moins lorsqu'une communication s'achève et qu'ils sont libres.

La présente invention sera mieux comprise et d'autres caractéristiques apparaîtront à l'aide de la description ci-après et des figures s'y rapportant qui représentent :
- la figure 1, un réseau de communication,
- les figures 2 à 5 et 6 à 9, des processus de communication de données et de parole mis en oeuvre dans le réseau selon la figure 1.

Le procédé selon l'invention va être présenté dans le cadre d'une structure de type réseau maillé et des indications seront données pour son utilisation dans le cadre d'un réseau en étoile. Les étapes successives du procédé seront décrites en ne rentrant dans les détails que là ou cela s'avérera nécessaire pour la compréhension de l'invention ; ainsi la transmission de données par paquets étant bien connue de l'homme du métier, il sera par exemple indiqué que telle ou telle information est transmise dans un paquet sans que la structure du paquet utilisé soit décrite. De même les étapes successives du procédé selon l'invention seront décrites mais le logiciel correspondant ne le sera pas, étant donné qu'il ne présente pas de difficultés et est donc à la portée d'un homme de métier, ici un programmeur, de compétences moyennes.

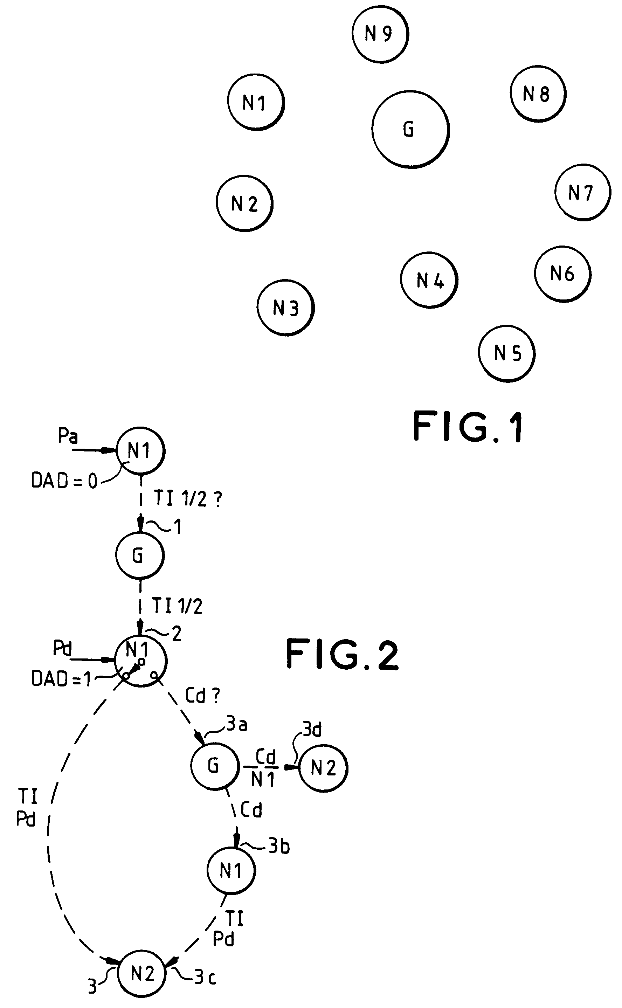

La description qui suit concerne les étapes successives d'une communication depuis la procédure d'établissement jusqu'à la procédure de clôture et ceci dans un réseau maillé constitué, comme indiqué sur la figure 1, de noeuds de communication N1 à N9 et d'un organe de gestion G ; il s'agit ici d'un réseau maillé dans lequel chaque noeud peut communiquer directement avec n'importe quel autre des noeuds du réseau et il est à noter que, dans le cas d'un réseau en étoile avec un noeud principal et des noeuds secondaires qui ne peuvent communiquer qu'avec le noeud principal, il sera intéressant de regrouper le noeud principal et l'organe de gestion, ce qui réduira à de simples conducteurs sur un même circuit ou entre deux circuits voisins, les liaisons à établir entre l'organe de gestion et le noeud principal.

Le réseau selon la figure 1, dont le fonctionnement va être décrit à l'aide des figures 2 et suivantes, a été réalisé en fonction des critères ci-après :
- chaque noeud dispose d'une "intelligence" propre et comporte pour cela un micro-processeur qui gère les échanges de signaux avec l'organe de gestion, les autres noeuds et les utilisateurs du noeud considéré et qui, en permanence, connaît l'état d'occupation des canaux qui lui sont attribués par l'organe de gestion,
- des canaux gérés par l'organe de gestion G sont attribuables à tout noeud, à sa demande, pour qu'il puisse émettre vers un autre noeud, alors que d'autres canaux, donc il sera question plus loin, assurent des liaisons permanentes entre l'organe de gestion et chacun des noeuds,
- quand une communication est établie entre deux noeuds c'est le noeud qui est à l'origine de la communication qui se charge de la clore c'est-à-dire, en particulier, de prévenir l'organe de gestion que la communication doit être considérée comme terminée,
- quand un canal est attribué il l'est pour émettre uniquement de la parole ou uniquement des paquets de données, mais il peut être attribué, par exemple, une fois pour émettre de la parole et la fois suivante pour émettre des données,
- entre chaque noeud et l'organe de gestion deux canaux, un dans chaque sens, sont disponibles en permanence pour permettre une communication portant sur des échanges de données de gestion du procédé,
- un canal attribué pour un sens donné d'une communication donnée entre deux noeuds, sera utilisé, tant que sa capacité le permettra, pour le sens donné, par d'autres communications simultanées entre les deux noeuds considérés ; dans le cas de paquets de données la capacité est fonction de la durée de transmission des paquets et, dans le cas de la parole, la capacité est fonction de la durée des silences et il est à noter que même lorsque la parole semble être à débit continu, les silences entre les syllabes représentent de l'ordre de soixante pour cent de silence au milieu de la parole.

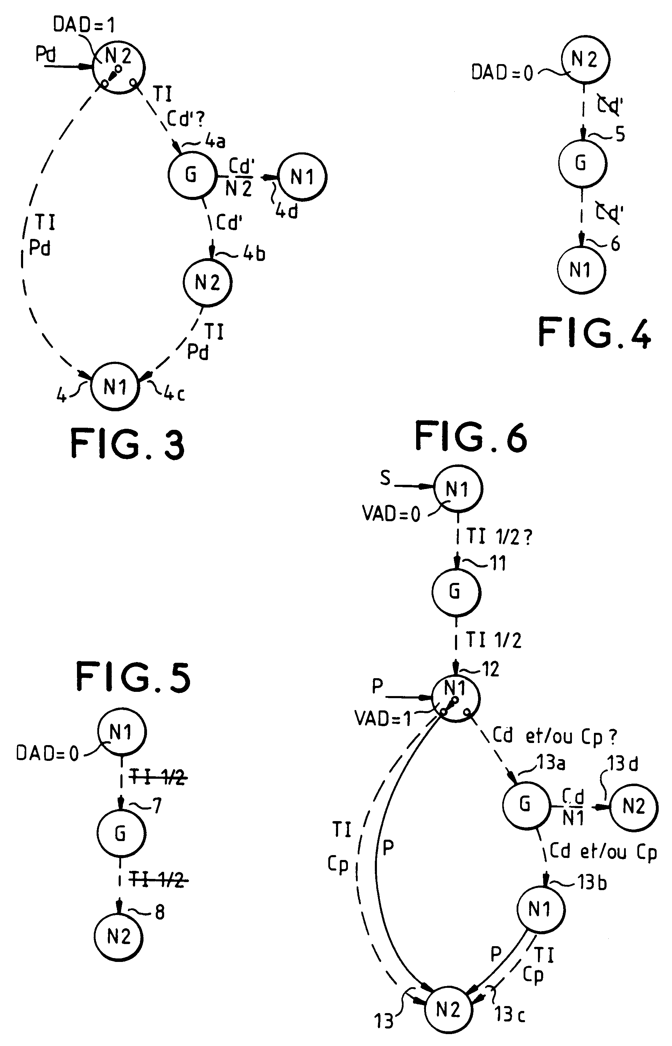

Les figures 2 à 5 sont relatives à des échanges de données et correspondent respectivement à l'initialisation d'une communication, à la transmission au cours de la communication, à un arrêt momentané de transmission de données et à l'achèvement de la communication ; ces opérations sont décrites pour deux noeuds du réseau selon la figure 1. Comme d'ailleurs dans le cas des figures 6 à 9 qui concernent des échanges d'informations de parole, il est supposé que la communication considérée s'effectue entre les noeuds N1 et N2 et que c'est le noeud N1 qui appelle le noeud N2 ; dans ces figures les étapes successives du procédé de communication sont indiquées par des flèches tandis que des ronds symbolisent les noeuds N1, N2 et l'organe de gestion G.

Dans le haut de la figure 2 est représenté le noeud N1, alors qu'il vient de recevoir d'un abonné qui lui est relié un paquet d'appel, Pa, indiquant qu'une communication de données va devoir être établie avec un abonné donné du noeud N2 ; à ce moment il n'y a pas, à proprement parler, d'activité de données, ce qui est figuré par DAD = 0, DAD signifiant détecteur d'activité de données (ou Data Activity Detector dans la littérature anglo-saxonne). N1 demande alors, symbolisé par une flèche 1, à l'organe de gestion G un numéro d'identification qui désignera la communication, aussi bien dans un sens que dans l'autre, à établir entre N1 et N2 ; ceci est symbolisé par "TI1/2?" (Tl: initiales des mots anglais Transaction Identifier qui peuvent se traduire par "numéro d'identification d'une communication"). G répond à N1 en fournissant un numéro d'identification de communication, Tl1/2, dans lequel est incluse l'adresse de N1, de N2 et de l'abonné de N2 qui est concerné ; ceci est symbolisé par la flèche 2 qui va de G vers N1 et il est à noter qu'il y aura autant de Tl1/2 différents à un moment donné qu'il y aura, à ce moment, de communications entre N1 et N2 déclenchées par N1 ; les communications entre N1 et N2 déclenchées par N2, quant à elles, seraient notées Tl2/1.

Quand N1 a ce Tl1/2 le processus se poursuit dès qu'il a un paquet de données, Pd, à transmettre à N2 pour le compte de la communication Tl1/2 considérée, soit que ce paquet Pd parvient à N1 à un moment donné, soit qu'il ait été gardé en mémoire dans N1 en attendant que N1 ait le Tl1/2 correspondant. N1 étudie alors s'il possède déjà des canaux qui lui ont été attribués par l'organe de gestion G pour émettre vers N2 et si, parmi ces canaux, il en existe un, non encore complètement occupé par d'autres communications. Si ces deux conditions ne sont pas remplies N1 demande à G, flèche 3a, pour la communication Tl1/2, un canal pour effectuer une communication avec N2 ; ceci est symbolisé par "Cd?" écrit à côté de la flèche 3a ; G va alors communiquer à N1, flèche 3b, et à N2, flèche 3d, un numéro de canal disponible, "Cd", afin que, sur ce canal Cd, N1 puisse émettre, flèche 3c, des paquets de données, Pd, précédés chacun du Tl relatif à ces paquets et que N2 se mette à l'écoute des informations qui pourraient lui parvenir sur ce canal ; N2 est, de plus, informé par G, flèche 3d, de ce que la communication provient de N1. Si ces deux conditions sont remplies N1 peut directement, flèche 3, émettre, sur le canal disponible, des paquets de données précédés chacun du Tl relatif à ces paquets ; N2 recevra ces paquets puisque, précédemment, lorsque ce canal avait été attribué à N1 pour une autre communication toujours en cours avec N2, N2 avait été prévenu par G de se mettre à l'écoute du canal considéré comme indiqué par la flèche 3d. Sur la figure 2, un commutateur à deux positions dessiné à l'intérieur du cercle N1 dont partent les flèches 3a et 3, symbolise l'alternative décrite dans les deux phrases précédentes.

La figure 3 correspond à ce qui peut être appelé une transmission au cours de la communication : N2 a reçu des paquets de données en provenance de N1 et veut maintenant lui répondre avec des paquets de données, c'est-à-dire que son DAD est à 1 et qu'il a au moins un paquet à adresser à N1. Comme pour la figure 2 deux cas se présentent selon que N2 dispose ou non d'un canal attribué par G et dans lequel peuvent, en plus des informations de données qui y circulent déjà, être ajoutées les informations de données relatives à la communication Tl1/2 considérée. Si aucun canal n'est disponible N2 en demande un à G afin d'émettre sur ce canal : ceci est illustré par les flèches 4a, 4b, 4c, 4d qui correspondent aux mêmes étapes que les flèches 3a, 3b, 3c, 3d de la figure 2, en intervertissant N1 et N2 dans cette figure. De même si un canal déjà utilisé par N2 vers N1, pour une autre communication, permet également d'acheminer la communication considérée, il sera utilisé ; ceci est illustré par la flèche 4 qui correspond à la même étape que la flèche 3 de la figure 2 mais dans le sens N2 vers N1.

Pour la suite d'une communication N1 et N2 émettront alternativement ou simultanément selon le processus illustré sur la figure 3. Et, chaque fois que l'un d'entre eux cessera momentanément d'émettre pour le compte d'un Tl et que son DAD correspondant sera à zéro, il vérifiera si, de ce fait, un canal, Cd', est libéré ; si c'est le cas il le rendra à l'organe de gestion G; ceci est illustré par la figure 4 où N2, n'ayant plus besoin d'un de ses canaux pour émettre, en informe G, flèche 5 et référence Cd' barrée, qui lui-même informe N1 qu'il n'a plus à rester à l'écoute sur le canal considéré flèche 6 et référence Cd' barrée. Il est à noter que, dans une variante de réalisation, un canal attribué à un noeud, pour une communication Tl donnée, n'est rendu à l'organe de gestion qu'à l'occasion de l'achèvement d'une communication à condition toutefois qu'il soit libre à ce moment là ; cela entraîne que le processus selon la figure 4 n'est mis en oeuvre qu'à l'occasion de l'achèvement d'une communication de données.

Il reste à voir, pour la transmission de données, comment s'achève une communication ; il a été indiqué, plus avant, que c'était le noeud qui était à l'origine de la communication considérée, à savoir le noeud N1 dans le cas illustré par la figure 2, qui se chargerait de la clore.

La figure 5 se rapporte à l'achèvement d'une communication déclenchée par le noeud N1 entre les noeuds N1 et N2. Même si N2 arrête le premier d'émettre dans le cadre de la communication Tl1/2 considérée, ce n'est pas lui qui va se charger de déclencher le processus d'achèvement de cette communication, c'est N1, qui, informé de ce que N2 ne désire plus émettre et n'ayant plus d'informations à émettre vers N2, va s'en charger. Pour cela N1 envoie à l'organe de gestion G un paquet contenant un message de désactivation qui indique à G que la communication Tl1/2 considérée est achevée : fèche 7 et Tl1/2 rayé; et G en informe N2 : flèche 8 et Tl1/2 rayé. Si en plus la fin de la communication Tl1/2 s'accompagne de la libération d'un canal par N1, N1 en avertira G en ajoutant cette information dans le paquet contenant le message de désactivation et G avertira N2 qu'il n'a plus à surveiller le canal ainsi libéré par N1; il s'agit donc du même processus de libération de canal que dans le cas de la figure 4 où N2 libérait un canal d'émission pour le rendre à G et où G avertissait N1 qu'il n'avait plus à surveiller le canal libéré par N2.

Pour une communication par échange d'informations de parole dans le réseau selon la figure 1, les différentes étapes diffèrent légèrement de ce qui vient d'être décrit dans la réalisation qui sert d'exemple à la présente description. Ceci est dû au fait que, en plus de la parole, des informations de données doivent être échangées or il a été indiqué qu'un des critères selon lesquels a été réalisé le réseau qui sert à la présente description prévoit qu'un canal, lorsqu'il est attribué, ne peut servir à émettre que de la parole ou que des données ; pour satisfaire à ce critère il n'est plus possible, lorsqu'un noeud commence à émettre, de faire que la donnée Tl qui identifie la communication soit émise sur le même canal que l'information proprement dite, comme c'était le cas avec des paquets de données ; les étapes 3, 3c, 4 et 4c vont s'en trouver modifiées par la nécessité d'avoir non pas seulement un canal dédié à la parole pour émettre d'un noeud vers un autre noeud mais également un canal dédié aux données par lequel le noeud émetteur pourra prévenir le noeud récepteur qu'il va recevoir sur un canal, Ci, donné une communication Tl donnée. Il est bien entendu que ces canaux, utilisés pour l'acheminement de données, relatives à une communication par échanges d'informations de parole pourront, en temps partagé, également acheminer des communications par échanges de données, telles que décrites à l'aide des figures 2 à 5. Ainsi les étapes 3a, 3b de la figure 2 et 4a, 4b de la figure 3 seront également modifiées puisqu'il pourra être nécessaire à un noeud, pour émettre, de demander à l'organe de gestion un canal de parole et/ou de données.

Cette façon de procéder est illustrée par les figures 6 à 9 dans lesquelles chaque étape est représentée par une flèche en traits interrompus lorsqu'elle met en oeuvre un canal de données, par une flèche en trait plein lorsqu'elle met en oeuvre un canal de parole et par une flèche en trais interrompus et une flèche en trait plein lorsqu'elle met en oeuvre un canal de parole et un canal de données ; les étapes représentées par ces flèches sont désignées par les mêmes références augmentées de 10 que les étapes correspondantes dans les figures 2 à 5 relatives à une communication de données.

La figure 6 est relative à l'initialisation d'une communication de parole par le noeud N1. Dans le noeud N1 le détecteur d'activité vocale (Voice Activity Detector dans la littérature anglo-saxonne) relatif à l'un des abonnés raccordé à ce noeud étant à zéro, VAD = 0, un signal S de déclenchement de communication est envoyé de l'abonné considéré vers le noeud N1; le signal S indique qu'une communication de parole va devoir être établie avec un abonné donné du noeud N2. N1 demande alors, flèche 11 et "Tl1/2?", un numéro d'identification, Tl, pour la communication à établir ; le numéro d'identification Tl comporte les adresses de N1, de N2 et de l'abonné de N2 qui est concerné. G fournit ce numéro de communication, flèche 12 et "Tl1/2".

Dès que N1 reçoit un signal de parole en provenance de son abonné considéré il peut, flèches 13, s'il dispose d'un canal de données et d'un canal de parole utilisables à cet effet, d'une part envoyer sur le canal de données le numéro d'identification, Tl, de la communication ainsi que le numéro du canal de parole, Cp, utilisable et envoyer simultanément, d'autre part, sur le canal de parole utilisable, les signaux de parole. S'il n'y a pas de canal de données, Cd, et/ou de parole, Cp, utilisables de N1 vers N2, N1 va en demander à G, flèche 13a et "Cd et/ou Cp?". G en attribue un à N1, flèche 13b et "Cd et/ou Cp", et avertit N2, flèche 13d et "Cd,N1" qui va devoir surveiller sur le canal ainsi attribué à N1 une communication en provenance de N1. N1 peut alors, flèches 13c, "Tl, Cp" et "P", émettre vers N2.

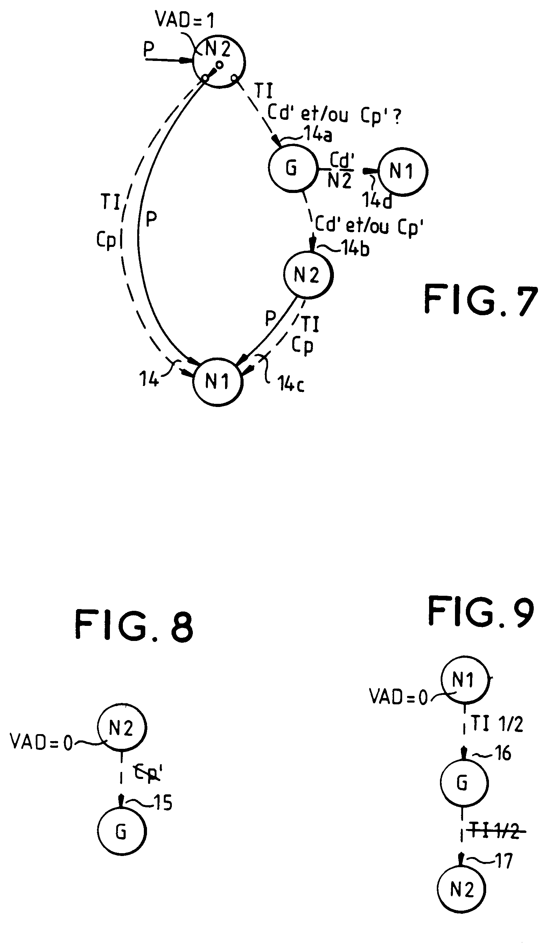

La figure 7 montre, en différentes étapes notées 14, 14a, 14b, 14c, 14d, comment N2 répond à N1. Ces étapes sont la réplique des étapes 13, 13a, 13b, 13c, 13d selon la figure 6.

Chaque fois qu'un noeud cesse d'émettre, même momentanément, de la parole sur un canal, il en avertit l'organe de gestion G afin de lui restituer le canal de parole non utilisé et avertit le noeud avec lequel il était en communication de la fin de cette communication, par l'envoi d'un message de données de signalisation ou, selon les variantes, par l'envoi d'une séquence de parole particulière. Ceci est illustré par la flèche 15 de la figure 8. Comme avec les communications de données une variante de réalisation consiste en ce qu'un canal attribué à un noeud pour une communication n'est rendu à l'organe de gestion qu'à l'occasion de l'achèvement d'une communication à condition toutefois qu'il soit libre à ce moment là ; cela entraîne que le processus selon la figure 8 n'est mis en oeuvre qu'à l'occasion de l'achèvement d'une communication de parole.

L'achèvement d'une communication de parole s'effectue, à partir du noeud à l'origine de la communication, comme pour une communication de données ; ceci est illustré par la figure 9 qui est la copie de la figure 5 où DAD = 0 a été remplacé par VAD = 0 et où les flèches 7, 8 ont été remplacées par les flèches 16, 17.

L'invention décrite ci-avant a été présentée dans le cadre d'une réalisation simple de manière à faciliter les explications. Il est à noter que des variantes existent où, des communications étant classées comme prioritaires, il est prévu, si l'organe de gestion ne dispose plus de canaux à leur attribuer, qu'il retire un canal de manière autoritaire à une ou des communications non prioritaires en cours ; dans le cas concret de réalisation selon cette variante il s'agissait, pour les communications prioritaires, de communications relatives à des signaux d'urgence très brefs ce qui, amenait par exemple à interrompre une communication de parole pendant un temps suffisamment court pour qu'il n'empêche pas la compréhension de l'information de parole.

L'organe de gestion, responsable de l'allocation des canaux, peut également être responsable, à la place des noeuds émetteurs, de la reprise en compte des canaux quand ils se libèrent.

Certaines transmissions de données, quand elles concernent des paquets de longueur importante, peuvent être réalisées de la même manière que la transmission de la parole avec indication de début de paquet et indication de fin de paquet, et cela sur un canal de données.

## Revendications

1. Procédé de gestion de la transmission de la parole et de données dans une structure à accès multiples à répartition dans le temps comportant des noeuds de communication (N1-N9) et des canaux de communication pour permettre d'établir des communications entre les noeuds, caractérisé en ce qu'il consiste, quand une communication doit être établie entre deux noeuds de la structure, à attribuer un numéro d'identification (Tl) à la communication considérée, à le faire connaître aux deux noeuds considérés et à l'associer à chaque transmission relative à la communication considérée, à utiliser en priorité les canaux déjà utilisés pour d'autres communications entre les deux noeuds considérés et capables de passer en plus la communication considérée et, s'il n'en existe pas ou s'il ne sont pas capables de passer en plus la communication considérée, à demander l'attribution de canaux à un organe de gestion (G) des canaux, et à rendre des canaux attribués à l'organe de gestion au moins lorsqu'une communication s'achève et qu'ils sont libres.

2. Procédé selon la revendication 1, caractérisé en ce qu'il consiste à rendre également des canaux libres à l'organe de gestion quand ces canaux sont libres du fait de silences dans les communications.

3. Procédé selon l'une des revendications précédentes, caractérisé en ce que, pour la transmission de données, il consiste à prévenir les noeuds des canaux qu'ils doivent surveiller en permanence.

4. Procédé selon la revendication 3, caractérisé en ce que, pour la transmission de la parole et certaines transmissions de données, il consiste à faire que chacun des deux noeuds considérés désigne, sur un canal que l'autre surveille, un canal non surveillé sur lequel il va lui envoyer de la parole.

5. Structure à accès multiples caractérisée en ce qu'elle met en oeuvre le procédé selon l'une au moins des revendications précédentes et comporte pour cela des noeuds de communication (N1-N9) et un organe de gestion (G) qui attribue des canaux de communication aux noeuds en fonction des besoins des communications à établir entre les noeuds.
